# EUROPÄISCHE PATENTSCHRIFT

(11) **EP 3 882 491 B1**
(45) Veröffentlichungstag und Bekanntmachung des Hinweises auf die Patenterteilung: **02.11.2022**
(21) Anmeldenummer: 21157267.2
(22) Anmeldetag: 16.02.2021
(51) Int. Cl.: F16H 57/021, F16H 57/04

(54) **STÜTZRING MIT ÖLBOHRUNGEN**
SUPPORT RING WITH OIL BORES
TÔLE DE PROTECTION POURVUE DE TROUS D'HUILE

(30) Priorität: 16.03.2020 DE 102020203345
(43) Veröffentlichungstag der Anmeldung: 22.09.2021
(73) Patentinhaber: ZF Friedrichshafen AG, 88046 Friedrichshafen (DE)
(72) Erfinder: Fauck, Matthias, 58452 Witten (DE)
(74) Vertreter: ZF Friedrichshafen AG

(56) Entgegenhaltungen:
- CN-A- 101 586 538
- DE-A1- 3 209 514
- US-A1- 2012 108 380
- US-B1- 8 425 361

## Beschreibung

Die Erfindung betrifft ein Getriebe nach dem Oberbegriff von Anspruch 1.

Ein Beispiel für ein solches Getriebe findet sich im Dokument DE 32 09 514 A1.

Um Schmierstellen in einem Getriebe mit Öl zu versorgen, sind aus dem Stand der Technik separat ausgeführte Rohrleitungen bekannt. Diese haben den Nachteil, dass sie im engen Getriebegehäuse Platz beanspruchen und mit anderen Komponenten um knappen Bauraum konkurrieren. Häufig wird daher das Getriebegehäuse mit Ölbohrungen versehen. Diese sind bauraumneutral. Ein Nachteil ergibt sich allerdings dadurch, dass die Position der Mündungen der Ölbohrungen in das Getriebeinnere nicht variabel ist. Soll Öl von der Mündung einer Ölbohrung aus weitergeleitet werden, ist die Position entsprechender Leitungen durch die Position der Mündung vorgegeben. Dies erschwert den Zusammenbau des Getriebes und stellt eine potenzielle Fehlerquelle dar.

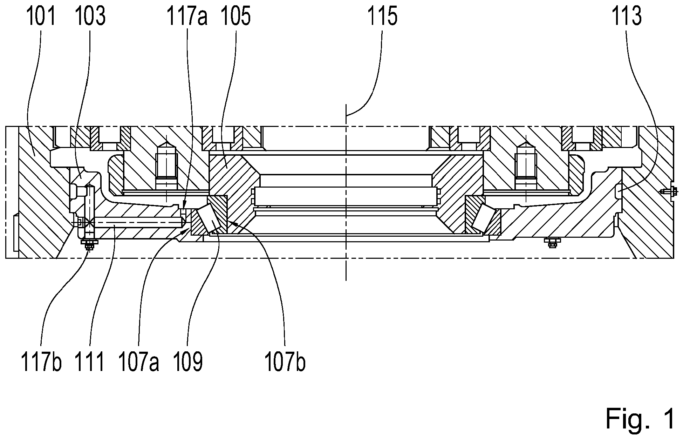

Der Erfindung liegt die Aufgabe zugrunde, die Ölversorgung eines Getriebes zu vereinfachen und die Fehlertoleranz beim Zusammenbau zu verbessern. Diese Aufgabe wird gelöst durch ein Getriebe nach Anspruch 1 und ein Getriebe nach Anspruch 2. Bevorzugte Weiterbildungen sind in den Unteransprüchen enthalten und ergeben sich aus nachfolgender Beschreibung sowie dem in Fig. 1 dargestellten Ausführungsbeispiel.

Das erfindungsgemäße Getriebe umfasst ein Gehäuse, mindestens einen Stützring und mindestens einen Planetenträger. Mit Stützring wird ein gehäusefestes Bauteil bezeichnet, in dem der Planetenträger drehbar gelagert ist.

Der Planetenträger ist mittels mindestens eines Lagers drehbar in dem Stützring gelagert. Das Lager weist zwei relativ zueinander verdrehbaren Teile, Lagerringe genannt, auf. Die Lagerringe jeweils eine Lagerlaufbahn aus. In den Lagerlaufbahnen stützen sich die Lagerringe gegeneinander ab. Im Falle eines Wälzlagers geschieht dies über Wälzkörper, die auf den Laufbahnen abrollen. Handelt es sich um ein Gleitlager, stützen sich die Lagerringe direkt oder über einen Schmierfilm gegeneinander ab.

Ein erster Lagerring des Lagers ist starr, das heißt, ohne die Möglichkeit einer Relativbewegung, in dem Stützring fixiert. Der erste Lagerring und der Stützring können als separate, physisch voneinander getrennte Stücke ausgeführt oder einstückig miteinander verbunden sein.

Analog ist ein zweiter Lagerring starr in dem Planetenträger fixiert. Auch der Planetenträger und der zweite Lagerring können als separate, physisch voneinander getrennte Stücke ausgeführt oder einstückig miteinander verbunden sein.

Der Stützring hat eine rotationssymmetrische Grundform. Vorzugsweise ist die Grundform zu einer Drehachse des Planetenträgers rotationssymmetrisch.

Die Grundform eines Körpers bezeichnet die Form eines ursprünglichen Körpers, aus dem der erstgenannte Körper durch Eliminieren einzelner Bereiche, etwa durch Einfügen von Aussparungen und/oder durch Hinzufügen einzelner Bereiche entstanden ist. Bei dem Stützring handelt es sich demnach um einen rotationssymmetrischen Körper oder um einen Körper, der aus einem rotationssymmetrischen Körper durch Eliminieren und/oder Hinzufügen einzelner Bereiche entstanden ist.

Der Stützring bildet mindestens eine Ölleitung aus. Vorzugsweise bildet der Stützring die Ölleitung einstückig aus. Insbesondere kann es sich bei der Ölleitung um ein oder mehrere ölleitend miteinander verbundene Bohrungen handeln. Eine solche ölleitende Verbindung kommt zustande, wenn jeweils zwei der Bohrungen ineinander münden.

Weiterhin ist der Stützring in dem Gehäuse fixiert. Insbesondere kann der Stützring lösbar in dem Gehäuse fixiert sein Die Fixierung des Stützrings in dem Gehäuse ist vorzugsweise starr ausgeführt.

Der Stützring ist nicht einstückig mit dem Gehäuse verbunden. Dies bedeutet, dass es sich bei dem Stützring und dem Gehäuse um separate, physisch voneinander getrennte Stücke handelt.

Die Erfindung sieht eine rotationssymmetrische Nut vor, über die Öl in die von dem Stützring ausgebildete Ölleitung eingeleitet wird. Eine Symmetrieachse der Nut stimmt vorzugsweise mit einer Symmetrieachse der rotationssymmetrischen Grundform des Stützrings überein. Insbesondere kann die Nut zu einer Drehachse des Planetenträgers rotationssymmetrisch sein

Eine Nut ist eine längliche Vertiefung einer Oberfläche. Sie zeichnet sich gegenüber anderen Vertiefungen einer Oberfläche durch einen entlang des Verlaufs der Nut unveränderlichen Querschnitt aus. Der Querschnitt ist also gegenüber einer orthogonal zu einer den Verlauf der Nut beschreibenden Kurve ausgerichteten Schnittebene invariant.

In einer ersten Variante der Erfindung weist der Stützring die Nut auf. Diese Variante sieht vor, dass die Nut durch das Gehäuse verschlossen. Ein Teil der Oberfläche des Stützrings weist also eine längliche Vertiefung auf, bei der es sich um die Nut handelt. Dieser Teil der Oberfläche des Stützrings steht in direktem Kontakt mit einem Teil der Oberfläche des Getriebegehäuses, der die Nut öldicht verschließt.

In einer zweiten Variante der Erfindung weist nicht der Stützring, sondern das Getriebegehäuse die Nut auf. Diese Variante sieht vor, dass die Nut durch den Stützring verschlossen wird. In dem Fall weist ein Teil der Oberfläche des Getriebegehäuses die längliche Vertiefung auf. Dieser Teil der Oberfläche des Getriebegehäuses steht in direktem Kontakt zu einem Teil der Oberfläche des Stützrings, der die Nut öldicht verschließt.

Die verschlossene Nut bildet in beiden Varianten der Erfindung einen Hohlraum, der die Form eines Toroids hat. Die von dem Stützring ausgebildete Ölleitung mündet in die Nut bzw. in diesen Hohlraum. Dadurch kommt eine ölleitende Verbindung zwischen dem Hohlraum und der von dem Stützring ausgebildeten Ölleitung zustande. Durch die rotationssymmetrische Form des Stützrings und der Nut ist diese Verbindung unabhängig von einer Winkellage des Stützrings relativ zu der Symmetrieachse seiner Grundform. Dies hat den Vorteil, dass der Stützring in beliebiger Winkellage eingebaut werden kann. Dadurch sinkt das Risiko eines Fehlers beim Einbau des Stützrings.

Gemäß der Erfindung ist das Gehäuse mit mindestens einer Ölleitung weitergebildet. Diese mündet in die Nut bzw. den von der Nut gebildeten Hohlraum. Dadurch entsteht zwischen der von dem Gehäuse ausgebildeten Ölleitung und dem Hohlraum eine ölleitende Verbindung. Über den von der Nut gebildeten Hohlraum sind also die von dem Gehäuse ausgebildete Ölleitung und die von dem Stützring ausgebildete Ölleitung ölleitend miteinander verbunden. Diese ölleitende Verbindung ist unabhängig von der Winkellage des Stützrings.

Die von dem Stützring ausgebildete Ölleitung mündet in der Erfindung in einen von dem Gehäuse ausgebildeten Hohlraum, d.h. in das Innere des Gehäuses. Über die von dem Stützring ausgebildete Ölleitung, den von der Nut ausgebildeten Hohlraum und gegebenenfalls die von dem Gehäuse ausgebildete Ölleitung kann daher weiterbildungsgemäß Öl in den von dem Gehäuse ausgebildeten Hohlraum eingeleitet werden.

Der von dem Gehäuse ausgebildete Hohlraum ist ölleitend mit dem mindestens einen Lager verbunden, mit dem der Planetenträger in dem Stützring gelagert ist. So kann das Lager etwa in dem Hohlraum angeordnet sein.

Durch die ölleitende Verbindung des von dem Gehäuse ausgebildete Hohlraum mit dem Lager wird das Lager mit Öl versorgt. Die Ölversorgung des Lagers ist dabei unabhängig von der Winkellage des Stützrings. Dadurch wird verhindert, dass Einbaufehler die Ölversorgung des Lagers gefährden können.

Das Getriebe ist bevorzugt als Vertikalgetriebe weitergebildet. Bei einem Vertikalgetriebe verläuft eine Hauptachse des Getriebes überwiegend vertikal. Insbesondere kann die Drehachse des Planetenträgers überwiegend vertikal verlaufen. Dies bedeutet, dass ein Winkel der Hauptachse bzw. der Drehachse des Planetenträgers zu einer Vertikalen, d.h. zu einer vertikal ausgerichteten Geraden, kleiner als 45° ist. Insbesondere handelt es sich um ein Vertikalgetriebe, wenn die Hauptachse bzw. Drehachse vollständig vertikal, d.h. parallel zu einer Vertikalen, verläuft.

Seilbahngetriebe sind gewöhnlich als Vertikalgetriebe ausgeführt. Bei dem weiterbildungsgemäßen Getriebe kann es sich entsprechend um ein Seilbahngetriebe.

Die von dem Stützring ausgebildete Ölleitung mündet weiterbildungsgemäß von unten in den von dem Gehäuse ausgebildeten Hohlraum. Dies bedeutet, dass eine Mündung der Ölleitung in den Hohlraum nach oben gerichtet ist. Dies impliziert, dass sich der Hohlraum oberhalb der Mündung der Ölleitung befindet. Umgekehrt verläuft ein Endstück der Ölleitung, welches die Mündung ausbildet, unterhalb des Hohlraums.

Durch die Weiterbildung wird das Öl von unten nach oben fließend in den Hohlraum eingeleitet. Dies hat den Vorteil, dass der Stützring das in den Hohlraum eingetretene Öl leitet.

Bevorzugt ist der Stützring weitergebildet, das Öl in das Lager des Planetenträgers einzuleiten. So ist mindestens ein Teil des Stützrings bevorzugt als Wanne weitergebildet, in welche die von dem Stützring ausgebildete Ölleitung mündet. Ein Stück des Planetenträgers oder eine Welle, die drehfest mit dem Planetenträger verbunden ist, verläuft dann durch die Wanne hindurch.

Das Innere der Wanne bildet mindestens einen Teil des oben beschriebenen Hohlraums. Über die von dem Stützring ausgebildete Ölleitung in die Wanne eingeleitetes Öl sammelt sich in der Wanne. Dadurch lassen sich innerhalb der Wanne angeordnete Schmierstellen, zu denen bevorzugt auch das mindestens eine Lager gehört, mit dem der Planetenträger gelagert ist, mit Öl versorgen.

Ein bevorzugtes Ausführungsbeispiel ist in Fig. 1 dargestellt. Im Einzelnen zeigt:
Fig. 1 einen Ausschnitt eines Getriebes.

Fig. 1 stellt im Einzelnen ein Getriebegehäuse 101 dar, in dem ein Stützring 103 fixiert ist. Der Stützring 103 dient der Lagerung eines Planetenträgers 105. Dazu bildet der Stützring 103 einen ersten Lagersitzt 107a aus. Ein zweiter Lagersitz 107b wird von dem Planetenträger 105 ausgebildet. Der erste Lagersitz 107a und der zweite Lagersitz 107b dienen der Fixierung jeweils eines Rings eines Lagers 109. Mittels des Lagers 109 ist der Planetenträger 105 drehbar in dem Stützring 103 gelagert.

Um das Lager 109 mit Schmierstoff zu versorgen, weist der Stützring 103 mehrere Bohrungen auf, die ölleitend miteinander verbunden sind und so eine Ölleitung 111 bilden.

Die Ölleitung 111 mündet in eine von dem Stützring 103 ausgebildete Nut 113. Die Nut 113 ist rotationssymmetrisch zu einer Mittelachse 115, die zugleich Drehachse des Planetenträgers 105 ist. Die Nut 113 ist in einen Teil der Oberfläche des Stützrings 103 eingebracht, der die Form einer Mantelfläche eines geraden, zu der Mittelachse 115 rotationssymmetrischen Kreiszylinders hat. Ausgehend von der Mittelachse 115 ist die Nut 113 radial nach außen hin geöffnet.

Der genannte Teil der Oberfläche des Stützrings 103 liegt unmittelbar an einem entsprechend geformten Teil der Oberfläche des Getriebegehäuses 101 an. Zwischen den beiden Teilen der Oberflächen des Stützrings 103 und des Getriebegehäuses 101 besteht eine Presspassung oder eine Spielpassung mit geringen Spiel. Dadurch wird die Nut 113 öldicht oder mit vernachlässigbar geringer Leckage abgedichtet. Die abgedichtete Nut 113 bildet eine Ringleitung in Gestalt eines toroidförmigen Hohlraums.

Über das Getriebegehäuse 101 wird Öl in den Hohlraum eingeleitet. Dazu ist das Getriebegehäuse 101 mit in Fig. 1 nicht dargestellten Bohrungen versehen, die ölleitend miteinander verbunden sind und so eine Ölleitung bilden. Diese Ölleitung mündet in den Hohlraum.

Das in den Hohlraum eingeleitete Öl wird durch die von dem Stützring 113 ausgebildete Ölleitung 111 weitergeleitet. Die Ölleitung 111 weist eine erste Austrittsstelle 117a und eine zweite Austrittsstelle 117b auf.

Die erste Austrittsstelle 117a befindet sich innerhalb einer von dem Stützring 111 gebildeten wannenförmigen Vertiefung. Das an der ersten Austrittsstelle 117a austretende Öl sammelt sich in dieser Vertiefung. Ebenso befindet sich das Lager 109 in dieser Vertiefung. Durch das in der Vertiefung gesammelte Öl wird das Lager 109 geschmiert.

Die zweite Austrittsstelle 117b ist mit einer Düse versehen. Diese verteilt Öl auf darunterliegende Getriebeteile.

### Bezugszeichen

- 101: Getriebegehäuse
- 103: Stützring
- 105: Planetenträger
- 107a: erster Lagersitz
- 107b: zweiter Lagersitz
- 109: Lager
- 111: Ölleitung
- 113: Nut
- 115: Mittelachse

## Patentansprüche

1. Getriebe mit einem Gehäuse (101), mindestens einem Stützring (103) und mindestens einem Planetenträger (105); wobei
der Planetenträger (105) drehbar in dem Stützring (103) gelagert ist; und wobei der Stützring (103) eine rotationssymmetrische Grundform hat, mindestens eine Ölleitung (111) ausbildet und in dem Gehäuse (101) fixiert, aber nicht einstückig mit dem Gehäuse (101) verbunden ist; **dadurch gekennzeichnet, dass** der Stützring (103) eine rotationssymmetrische Nut (113) aufweist, die durch das Gehäuse (101) verschlossen ist; wobei
die Ölleitung (111) in die Nut (113) mündet; **dadurch gekennzeichnet, dass** die von dem Stützring (103) ausgebildete Ölleitung (111) in einen von dem Gehäuse (101) ausgebildeten Hohlraum mündet, der die Ölleitung (111) ölleitend mit mindestens einem Lager (109) verbindet, mit dem der Planetenträger (105) in dem Stützring (103) gelagert ist.

2. Getriebe mit einem Gehäuse (101), mindestens einem Stützring (103) und mindestens einem Planetenträger (105); wobei
der Planetenträger (105) drehbar in dem Stützring (130) gelagert ist; wobei der Stützring (103) eine rotationssymmetrische Grundform hat, mindestens eine Ölleitung (111) ausbildet und in dem Gehäuse (101) fixiert, aber nicht einstückig mit dem Gehäuse (101) verbunden ist; wobei
das Gehäuse (101) eine rotationssymmetrische Nut aufweist, die durch den Stützring (103) verschlossen ist; wobei
die Ölleitung (111) in die Nut (113) mündet; **dadurch gekennzeichnet, dass** die von dem Stützring (103) ausgebildete Ölleitung (111) in einen von dem Gehäuse (101) ausgebildeten Hohlraum mündet, der die Ölleitung (111) ölleitend mit mindestens einem Lager (109) verbindet, mit dem der Planetenträger (105) in dem Stützring (103) gelagert ist.

3. Getriebe nach einem der vorhergehenden Ansprüche; **dadurch gekennzeichnet, dass**
das Gehäuse (101) mindestens eine Ölleitung ausbildet; die in die Nut (113) mündet.

4. Getriebe nach einem der vorhergehenden Ansprüche; **dadurch gekennzeichnet, dass**
das Getriebe als Vertikalgetriebe ausgebildet ist; wobei
die von dem Stützring (103) ausgebildete Ölleitung (111) von unten in dem Hohlraum mündet.

5. Getriebe nach dem vorhergehenden Anspruch; **dadurch gekennzeichnet, dass** der
Stützring (103) mindestens ein Teil einer Wanne bildet; wobei
die von dem Stützring (103) ausgebildete Ölleitung (111) in die Wanne mündet.

## Claims

1. Transmission having a housing (101), having at least one support ring (103), and having at least one planet carrier (105); wherein
the planet carrier (105) is mounted rotatably in the support ring (103); and wherein the support ring (103) has a rotationally symmetrical basic shape, forms at least one oil line (111), and is fixed in the housing (101) but not connected in one piece to the housing (101) ;
**characterized in that**
the support ring (103) has a rotationally symmetrical groove (113) which is closed off by the housing (101);
wherein
the oil line (111) opens out into the groove (113); **characterized in that**
the oil line (111) formed by the support ring (103) opens out into a cavity formed by the housing (101), which cavity connects the oil line (111) in an oil-conducting manner to at least one bearing (109), by way of which bearing the planet carrier (105) is mounted in the support ring (103).

2. Transmission having a housing (101), having at least one support ring (103), and having at least one planet carrier (105); wherein
the planet carrier (105) is mounted rotatably in the support ring (103); wherein the support ring (103) has a rotationally symmetrical basic shape, forms at least one oil line (111), and is fixed in the housing (101) but not connected in one piece to the housing (101); wherein the housing (101) has a rotationally symmetrical groove which is closed off by the support ring (103); wherein the oil line (111) opens out into the groove (113); **characterized in that**
the oil line (111) formed by the support ring (103) opens out into a cavity formed by the housing (101), which cavity connects the oil line (111) in an oil-conducting manner to at least one bearing (109), by way of which bearing the planet carrier (105) is mounted in the support ring (103).

3. Transmission according to either of the preceding claims, **characterized in that**
the housing (101) forms at least one oil line which opens out into the groove (113).

4. Transmission according to one of the preceding claims, **characterized in that**
the transmission is designed as a vertical transmission; wherein
the oil line (111) formed by the support ring (103) opens out into the cavity from below.

5. Transmission according to the preceding claim, **characterized in that**
the support ring (103) forms at least a part of a trough; wherein
the oil line (111) formed by the support ring (103) opens out into the trough.

## Revendications

1. Transmission comprenant un carter (101), au moins une bague d'appui (103) et au moins un porte-satellites (105) ;
le porte-satellites (105) étant monté à rotation dans la bague d'appui (103) ; et
la bague d'appui (103) ayant une forme de base à symétrie de rotation, formant au moins un conduit d'huile (111) et étant fixée dans le carter (101), mais n'étant pas reliée d'un seul tenant au carter (101) ; **caractérisée en ce que**
la bague d'appui (103) présente une rainure (113) à symétrie de rotation, qui est fermée par le carter (101) ;
le conduit d'huile (111) débouchant dans la rainure (113) ; **caractérisée en ce que**
le conduit d'huile (111) formé par la bague d'appui (103) débouche dans une cavité formée par le carter (101), qui relie de manière conductrice d'huile le conduit d'huile (111) à au moins un palier (109), par lequel le porte-satellites (105) est monté dans la bague d'appui (103).

2. Transmission comprenant un carter (101), au moins une bague d'appui (103) et au moins un porte-satellites (105) ;
le porte-satellites (105) étant monté à rotation dans la bague d'appui (103) ;
la bague d'appui (103) ayant une forme de base à symétrie de rotation, formant au moins un conduit d'huile (111) et étant fixée dans le carter (101), mais n'étant pas reliée d'un seul tenant au carter (101) ;
le carter (101) présentant une rainure à symétrie de rotation, qui est fermée par la bague d'appui (103) ;
le conduit d'huile (111) débouchant dans la rainure (113) ; **caractérisée en ce que**
le conduit d'huile (111) formé par la bague d'appui (103) débouche dans une cavité formée par le carter (101), qui relie de manière conductrice d'huile le conduit d'huile (111) à au moins un palier (109), par lequel le porte-satellites (105) est monté dans la bague d'appui (103).

3. Transmission selon l'une quelconque des revendications précédentes ; **caractérisée en ce que** le carter (101) forme au moins un conduit d'huile qui débouche dans la rainure (113).

4. Transmission selon l'une quelconque des revendications précédentes ; **caractérisée en ce que** la transmission est configurée sous forme de transmission verticale ;
le conduit d'huile (111) formé par la bague d'appui (103) débouchant par le bas dans la cavité.

5. Transmission selon la revendication précédente ; **caractérisée en ce que**
la bague d'appui (103) forme au moins une partie d'une cuvette ;
le conduit d'huile (111) formé par la bague d'appui (103) débouchant dans la cuvette.
